# EUROPEAN PATENT APPLICATION

(11) **EP 3 733 578 A1**
(43) Date of publication of application: **04.11.2020**
(21) Application number: 19172599.3
(22) Date of filing: 03.05.2019
(51) Int. Cl.: B66B 1/30

(54) **REGENERATIVE DRIVE**

(71) Applicant: Otis Elevator Company, Farmington, Connecticut 06032 (US)
(72) Inventor: GLESSNER, Stephan, 13507 Berlin (DE); HORBRÜGGER, Herbert, 13589 Berlin (DE); THE, Andrew, 13507 Berlin (DE); SCHÖNAUER, Uwe, 13507 Berlin (DE)
(74) Representative: Dehns

(57) **Abstract**

A regenerative elevator drive (2) is arranged to receive power from, and supply regenerative energy to, an external power supply (4, 10) and is arranged to direct excess regenerative energy through a dynamic braking resistor (20). An inverter (16) is arranged to receive a DC voltage, derived from the external power supply (4, 10), and to convert the DC voltage to an AC voltage for output to an external motor (22). A DC link capacitor (14) is connected across the input of the inverter (16). A circuit breaker unit (54) is arranged to switch between a first state which provides a connection between the inverter (16) and the external power supply (4, 10), and a second state which disconnects the inverter (16) from the external power supply (4,10). The circuit breaker unit (54) is arranged to provide a discharge path from the DC link capacitor (14) via the dynamic braking resistor (2) only in the second state. The drive (2) may also determine the state-of-health and/or the expected end of life of the battery (10) by passing a current from the battery (10) through the dynamic braking resistor (20).

## Description

### Technical Field

This invention relates to regenerative drives for elevator systems, particularly those that use a dynamic braking resistor to consume excess energy that cannot be recycled.

### Background Art

Elevator systems may be designed to operate over a specific input voltage range from a power source. The components of the drive of the elevator have voltage and current ratings that may allow the drive to continuously operate while the power supply remains within the designed input voltage range. However, in some scenarios, the local power supply of the utility network is less reliable, such as scenarios in which the utility voltage sags, brownout conditions occur (e.g. voltage conditions below the tolerance band of the elevator drive) and/or power loss conditions become prevalent. When such utility failures occur, the drive draws more current from the power supply to maintain uniform power to the hoist motor. In conventional systems, when excess current is drawn from the power supply, the drive may shut down to avoid damaging components of the drive.

In recent elevator designs, the drive of the elevator may employ a regenerative hybrid drive system. A hybrid drive delivers power to the motor from a main power supply during the normal operating condition and delivers power from a backup power supply in the case of a power failure operating condition (e.g., power sag, power loss, etc.). Regenerative drives harness power from the system, e.g. during braking or slowing of the elevator, and can use that power to recharge a battery or redirect that energy back to the grid. Such drives may include a converter on the input or power utility grid side and an inverter on the motor side, wherein power demand of the inverter is matched by an appropriate power capability on the converter. Such regenerative drives may need strict regulation by a controller to provide available power to the motor and to the backup power supply. Examples of such devices are further detailed in U.S. Patent Publication No. 2012/0261217 ("Regenerative Drive with Backup Power Supply"). Regenerative drives are also taught in JP 2004307133 and US 7,227,323.

A regenerative drive for an elevator has positive and negative power demands, which means that when the drive has a positive demand it may draw external power (e.g., from a local power source such as the grid or a dedicated battery) and when it has negative power demands it produces electricity as a generator (which is then fed back into the grid or used to charge a battery).

The voltages across various components are typically strictly regulated and managed in regeneration scenarios, which is when the motor produces energy as a generator in negative power scenarios. In such systems, a direct current (DC) link capacitor may be present that bridges the inverter and converter and acts to smooth power output and to buffer the output current of the inverter and converter. Those skilled in the art will appreciate that, in general, a DC link capacitor is provided in order to provide a relatively low impedance path for high frequency switching currents. This DC link capacitor acts as a filter capacitor, providing a stable DC voltage at the input of the inverter, which converts the DC voltage at its input to an AC voltage at its output which is provided to the motor.

### Summary of the Invention

In accordance with a first aspect, the present disclosure provides a regenerative elevator drive arranged to receive power from an external power supply, the regenerative elevator drive comprising:
an inverter arranged to receive at an input thereof a DC voltage, derived from the external power supply, and to convert the DC voltage to an AC voltage for output to an external motor;
a DC link capacitor connected across the input of the inverter;
a dynamic braking resistor; and
a circuit breaker unit arranged to switch between a first state and a second state, wherein the first state provides a connection between the inverter and the external power supply, and wherein the second state disconnects the inverter from the external power supply;
wherein the regenerative elevator drive is arranged to direct regenerative energy to the external power supply, said regenerative elevator drive being further arranged to direct excess regenerative energy through said dynamic braking resistor; and
wherein the circuit breaker unit is arranged such that the circuit breaker unit provides a discharge path from the DC link capacitor via the dynamic braking resistor only in the second state.

This first aspect extends to an elevator system comprising the regenerative elevator drive in accordance with the first aspect outlined above, wherein the elevator system comprises the external motor. Thus this first aspect extends to an elevator system comprising a regenerative elevator drive coupled to a motor, said regenerative elevator drive being arranged to receive power from an external power supply, the regenerative elevator drive comprising:
an inverter arranged to receive at an input thereof a DC voltage, derived from the external power supply, and to convert the DC voltage to an AC voltage for output to the motor;
a DC link capacitor connected across the input of the inverter;
a dynamic braking resistor; and
a circuit breaker unit arranged to switch between a first state and a second state, wherein the first state provides a connection between the inverter and the external power supply, and wherein the second state disconnects the inverter from the external power supply;
wherein the regenerative elevator drive is arranged to direct regenerative energy to the external power supply, said regenerative elevator drive being further arranged to direct excess regenerative energy through said dynamic braking resistor; and
wherein the circuit breaker unit is arranged such that the circuit breaker unit provides a discharge path from the DC link capacitor via the dynamic braking resistor only in the second state.

This first aspect also extends to a method of operating a regenerative elevator drive arranged to receive power from an external power supply, the method comprising:
receiving at an input of an inverter a DC voltage, derived from the external power supply;
converting the DC voltage to an AC voltage for output to an external motor;
directing regenerative energy to the external power supply, wherein excess regenerative energy is directed through a dynamic braking resistor;
operating a circuit breaker unit in a first state which provides a connection between the inverter and the external power supply; and
operating the circuit breaker unit in a second state which disconnects the inverter from the external power supply, wherein the circuit breaker unit is arranged such that the circuit breaker unit provides a discharge path from the DC link capacitor via the dynamic braking resistor only in the second state.

Power from the grid may be supplied to the drive as multi-phase AC power. However, in some installations, power from the grid may instead be supplied as single-phase AC power. Generally, multi-phase AC power leads to a 'smoother' DC output from the converter, while single-phase AC power is less smooth. In order to address this issue, a much larger DC link capacitor may be provided in a drive for use in a single-phase system than would otherwise be necessary in a multi-phase system. By way of non-limiting example only, a DC link capacitor in a single-phase system may have a capacitance between 300 µF and 500 µF, e.g. between 350 µF and 450 µF, and in some examples may be approximately 390 µF. The resistance of the dynamic braking resistor may, by way of non-limiting example only, be approximately between 100 Ω and 250 Ω, e.g. between 150 Ω and 200 Ω, and in some examples may be approximately 175 Ω.

In this disclosure it is appreciated that the use of a relatively large DC link capacitor incurs some disadvantages. In order to carry out maintenance on the elevator, the DC link capacitor must be discharged for safety purposes. However, a larger capacitor will take longer to discharge. This may, in some scenarios, increase the amount of time required to complete a maintenance task from 3 minutes (with a multi-phase system) to 15 minutes (with a single-phase system).

As the first step in maintenance operations is to switch the circuit breaker unit so as to disconnect the inverter, according to this disclosure, this step will also provide a fast discharge path for the capacitor, thus reducing the delay before maintenance can continue. This discharge path may be continuous so long as the circuit breaker unit remains in the second state, where the discharge path being continuous while the circuit breaker unit is in the second state is advantageous because it may improve the overall safety of the device, e.g. when carrying out maintenance work.

Thus it will be appreciated by those skilled in the art that examples of the present disclosure provide an improved regenerative elevator drive, and a method of operating the same, that addresses the above problem because the regenerative elevator drive is arranged to discharge the DC link capacitor through the dynamic braking resistor. This may significantly reduce the amount of time required for the DC link capacitor to discharge and thus be safe for maintenance to be carried out. In at least some examples, the amount of time taken for the DC link capacitor to be discharged may be in the order of seconds (rather than e.g. 15 minutes as outlined above).

It will be appreciated that the above-referenced 'regenerative' energy is the energy from the motor that is 'reclaimed', e.g. energy that can be recovered when the elevator brakes. This regenerative energy may be fed back into the grid or used to charge a battery, however it is not always possible to direct all regenerative energy in this way, and so a regenerative elevator drive may employ a dynamic braking resistor which is used to dissipate excess regenerative energy as heat. The advantageous arrangement disclosed herein makes use of this dynamic braking resistor that is typically already present within the regenerative drive and repurposes it for discharging the DC link capacitor relatively quickly. In other words, a regenerative device according to examples of the present disclosure may advantageously provide for an improved maintenance process without requiring any additional components, thus without substantially impacting the material cost and complexity of the drive.

A regenerative elevator drive in accordance with examples of the present disclosure may be advantageous with different types of external power supply. In a set of examples, the external power supply comprises a utility grid and the regenerative elevator drive further comprises a converter arranged to receive an AC voltage from the grid and convert said AC voltage to the DC voltage that is supplied to the inverter. While the AC voltage received from the utility grid could be a multi-phase AC voltage, in a preferred set of examples, the AC voltage received from the utility grid comprises a single-phase AC voltage. The principles of the present disclosure find particular application in single-phase systems, because such systems typically require the use of a relatively large DC link capacitor compared to multi-phase systems because of the larger ripple current that needs to be smoothed.

In order to convert the AC voltage from the utility grid to the DC voltage that is supplied to the inverter, in some examples the regenerative elevator drive comprises a rectifier, said rectifier being arranged to convert the AC voltage from the utility grid to the DC voltage that is supplied to the input of the inverter. In a set of such examples, the rectifier is a pulse width modulation (PWM) rectifier and comprises first, second, and third rectifier bridge portions, wherein:
each bridge portion comprises a respective positive and negative reverse-bias diode connected in series with a respective node between said diodes, wherein each reverse-bias diode is connected in parallel with a respective switch; and wherein a respective PWM control signal is applied to the switches to selectively short the corresponding node to the positive supply rail or the negative supply rail;
wherein the node of the first rectifier bridge portion is arranged for connection to a live input of the AC voltage;
wherein the node of the second rectifier bridge portion is arranged for connection to a neutral input of the AC voltage; and
wherein the node of the third rectifier bridge portion is connected to the dynamic braking resistor, such that the dynamic braking resistor is connected between the node of the third rectifier bridge portion and the DC link capacitor.

In a potentially overlapping set of examples, the external power supply comprises a battery, wherein the battery provides a DC voltage to the regenerative elevator drive. This DC voltage from the battery may be supplied directly to the inverter as the DC voltage input, or an intermediate DC voltage may be derived from the battery DC voltage, such that the inverter is supplied with that intermediate DC voltage. It will be appreciated that 'hybrid' elevator systems may make use of both a utility grid and a battery, e.g. such that the utility grid normally supplies power and the battery is used as an emergency back-up system. Thus, in some examples, the regenerative elevator drive is arranged to receive power from a plurality of external power sources, i.e. the above-referenced power source and a further power source.

In some examples, the DC link capacitor is connected between a positive supply rail and a negative supply rail, wherein the dynamic braking resistor is connected in series with the circuit breaker unit between the positive supply rail and the negative supply rail. In accordance with such examples, when the circuit breaker unit is operated in the second state the discharge path runs from the plate of the DC link capacitor connected to the positive supply rail, along the positive supply rail, and through the dynamic braking resistor to the negative supply rail to which the other plate of the DC link capacitor is connected.
In such examples, the dynamic braking resistor is connected to the negative supply rail when the circuit breaker unit is in the second state.

The circuit breaker unit may comprise a single circuit breaker, however in at least a set of examples, the circuit breaker unit comprises a first circuit breaker and a second circuit breaker, wherein the circuit breaker unit is arranged such that:
in the first state, the first circuit breaker provides a connection between the inverter and a first external power supply;
in the first state, the second circuit breaker provides a connection between the inverter and a second external power supply;
in the second state, the first circuit breaker disconnects the inverter from the first external power supply; and
in the second state, the second circuit breaker disconnects the inverter from the second external power supply;
wherein the first circuit breaker is mechanically coupled to the second circuit breaker. Such an arrangement may be particularly advantageous in systems where the regenerative elevator drive is arranged to receive power from both a utility grid and from a battery, e.g. such that the first external power supply is a utility grid and the second external power supply is a battery (or *vice versa*), in accordance with at least some examples described hereinabove. It will be appreciated that separation of the AC and DC sources through separate circuit breakers may typically be preferred.

It will be appreciated that the mechanical coupling means that switching one circuit breaker causes the other circuit breaker to also switch, i.e. the mechanical coupling causes both circuit breakers to trip (and likewise reset) at substantially the same time.

It can also be important in systems that utilise a battery to intermittently check the state-of-health of the battery to ensure that the condition of the battery is satisfactory and to determine the estimated remaining lifetime of the battery. In accordance with one standard approach, batteries are replaced frequently, e.g. after a fixed period of time (e.g. every 3-4 years). However, it has been appreciated that it would be beneficial if the state-of-health of the battery could be checked *in situ,* preferably automatically.

Thus in some examples in which the regenerative elevator drive is arranged to receive power from a battery, the regenerative elevator drive is arranged such that:
in a first diagnostic step, a first measurement of the DC voltage produced by the battery is measured while no current is supplied by the battery;
in a second diagnostic step, a second measurement of the DC voltage produced by the battery is measured while a current supplied by the battery is passed through the dynamic braking resistor;
wherein an internal resistance of the battery is determined from a ratio between a voltage difference and the current supplied by the battery in the second diagnostic step, said voltage difference being the difference between the first and second measurements of the DC voltage produced by the battery.

This is novel and inventive in its own right and thus, in accordance with a second aspect, the present disclosure provides a regenerative elevator drive arranged to receive power from a battery, the regenerative elevator drive comprising:
an inverter arranged to receive at an input thereof a DC voltage, derived from a DC voltage produced by the battery, and to convert the DC voltage to an AC voltage for output to an external motor; and
a dynamic braking resistor;
wherein the regenerative elevator drive is arranged to direct regenerative energy to the battery, said regenerative elevator drive being further arranged to direct excess regenerative energy through said dynamic braking resistor; and
the regenerative elevator drive being arranged such that:
   in a first diagnostic step, a first measurement of the DC voltage produced by the battery is measured while no current is supplied by the battery;
   in a second diagnostic step, a second measurement of the DC voltage produced by the battery is measured while a current supplied by the battery is passed through the dynamic braking resistor;
wherein an internal resistance of the battery is determined from a ratio between a voltage difference and the current supplied by the battery in the second diagnostic step, said voltage difference being the difference between the first and second measurements of the DC voltage produced by the battery.

This second aspect extends to an elevator system comprising the regenerative elevator drive in accordance with the second aspect outlined above, wherein the elevator system comprises the external motor. Thus this second aspect extends to an elevator system comprising a regenerative elevator drive coupled to a motor, said regenerative elevator drive arranged to receive power from a battery, the regenerative elevator drive comprising:
an inverter arranged to receive at an input thereof a DC voltage, derived from a DC voltage produced by the battery, and to convert the DC voltage to an AC voltage for output to an external motor; and
a dynamic braking resistor;
wherein the regenerative elevator drive is arranged to direct regenerative energy to the battery, said regenerative elevator drive being further arranged to direct excess regenerative energy through said dynamic braking resistor; and
the regenerative elevator drive being arranged such that:
   in a first diagnostic step, a first measurement of the DC voltage produced by the battery is measured while no current is supplied by the battery;
   in a second diagnostic step, a second measurement of the DC voltage produced by the battery is measured while a current supplied by the battery is passed through the dynamic braking resistor;
wherein an internal resistance of the battery is determined from a ratio between a voltage difference and the current supplied by the battery in the second diagnostic step, said voltage difference being the difference between the first and second measurements of the DC voltage produced by the battery.

This second aspect also extends to a method of operating a regenerative elevator drive arranged to receive power from a battery, the method comprising:
receiving at an input of an inverter a DC voltage, derived from the battery;
converting the DC voltage to an AC voltage for output to the motor;
directing regenerative energy to the battery, wherein excess regenerative energy is directed through a dynamic braking resistor;
in a first diagnostic step, taking a first measurement of the DC voltage produced by the battery while no current is supplied by the battery;
in a second diagnostic step, taking a second measurement of the DC voltage produced by the battery while a current supplied by the battery is passed through the dynamic braking resistor; and
determining an internal resistance of the battery from a ratio between a voltage difference and the current supplied by the battery in the second diagnostic step, said voltage difference being the difference between the first and second measurements of the DC voltage produced by the battery.

Those skilled in the art will appreciate that the regenerative elevator drive may determine the state-of-health and/or the expected end of life of the battery from the internal resistance of that battery by making use of the dynamic braking resistor that is typically provided for the dissipation of excess regenerative energy. The internal resistance is determined by the difference in voltage divided by the difference in current (which is, in effect, the current during the second diagnostic step because the current is zero in the first diagnostic step).

It will be appreciated that the terms 'first diagnostic step' and 'second diagnostic step' as used herein are labels to distinguish the two steps of the process outlined above, and is not intended to limit the order in which the operations of the process are carried out. For example, the second diagnostic step could be carried out before the first diagnostic step, and *vice versa.*

Again, this arrangement is particularly advantageous because it repurposes the dynamic braking resistor, and thus minimises the cost of adding this battery monitoring to existing drive circuitry. Advantageously, such an arrangement may not require the elevator car to move in order for the measurements to be taken, as is the case with some arrangements known in the art *per se.*

In some examples of this second aspect, the regenerative elevator drive comprises a DC link capacitor connected across the input of the inverter.

In some examples of either of the foregoing aspects, the regenerative elevator drive comprises a pulse width modulation (PWM) rectifier, said PWM rectifier comprising first, second, and third rectifier bridge portions, wherein:
each bridge portion comprises a respective positive and negative reverse-bias diode connected in series with a respective node between said diodes, wherein each reverse-bias diode is connected in parallel with a respective switch; and wherein a respective PWM signal is applied to the switches to selectively short the corresponding node to the positive supply rail or the negative supply rail;
wherein the node of the first rectifier bridge portion is arranged for connection to a live input of an AC voltage received from an external power supply;
wherein the node of the second rectifier bridge portion is arranged for connection to a neutral input of the AC voltage received from the external power supply; and
wherein the node of the third rectifier bridge portion is connected to the dynamic braking resistor, such that the dynamic braking resistor is connected between the node of the third rectifier bridge portion and the DC link capacitor;
wherein the regenerative elevator drive is arranged such that, when operated in the second diagnostic step, the switch arranged in parallel with the lower reverse-bias diode in the third rectifier bridge portion is closed such that the current supplied by the battery is passed through the dynamic braking resistor.

It will be appreciated that the examples described in relation to the first aspect may be readily applied, where appropriate, to the second aspect, and *vice versa.*

### Brief Description of the Drawings

Certain examples of the present disclosure will now be described with reference to the accompanying drawings, in which:
Fig. 1 is a circuit diagram of a regenerative elevator drive in accordance with an example of the present disclosure;
Fig. 2 is a circuit diagram of a regenerative elevator drive in accordance with a further example of the present disclosure;
Fig. 3 is a circuit diagram illustrating the Thevenin equivalent circuit of the monitored battery shown in Fig. 2; and
Fig. 4 is a block diagram of an elevator system that includes a regenerative elevator drive in accordance with an example of the present disclosure.

### Detailed Description

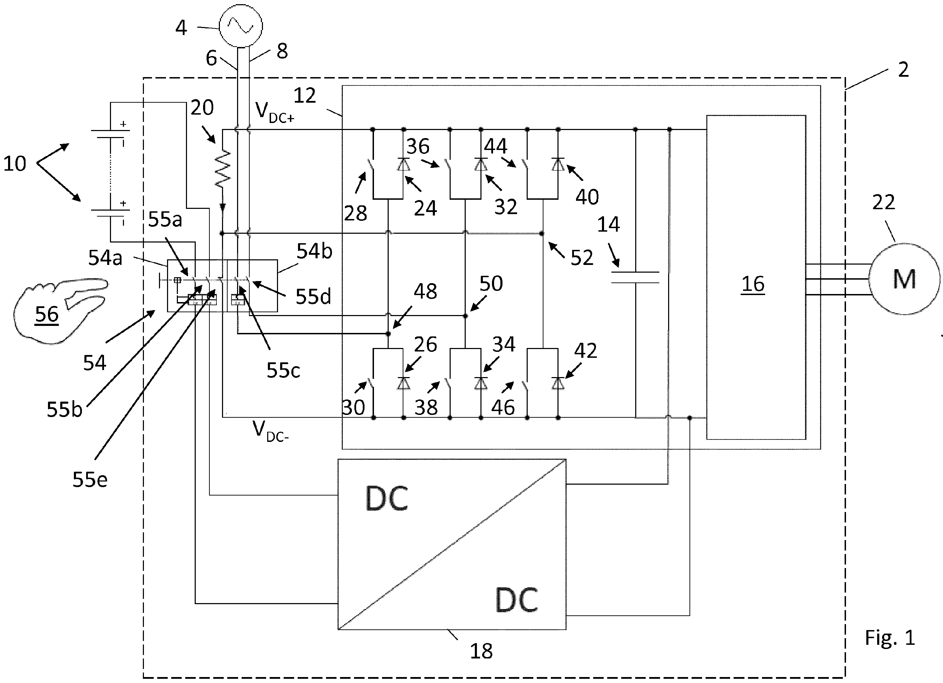

Fig. 1 is a circuit diagram of a regenerative elevator drive 2 in accordance with an example of the present disclosure. The regenerative elevator drive 2 is arranged for use in a hybrid elevator installation and can receive power from the utility grid 4, i.e. an external power supply. In this arrangement, the utility grid 4 is a single-phase supply of AC power, and thus provides a live connection 6 and a neutral connection 8. The hybrid elevator installation may also draw power from a battery 10 which provides a source of DC power. The regenerative elevator drive 2 may also supply electrical energy 'in reverse' to the utility grid 4 and/or the battery 10, as outlined in further detail below.

The regenerative elevator drive 2 comprises a power conversion unit 12 which includes a DC link capacitor 14 and an inverter 16. The regenerative elevator drive 2 also comprises a DC-DC converter 18 and a dynamic braking resistor 20. The regenerative elevator drive 2 exchanges power with an external motor 22, which is connected to the output of the inverter 16. The inverter 16 converts a DC voltage at its input to an AC voltage which is supplied to the external motor 22. When the regenerative elevator drive 2 provides energy back to the utility grid 4 and/or battery 10, the inverter 16 converts an AC voltage from the external motor 22 to a DC voltage which is supplied to the utility grid 4 and/or battery 10 as appropriate, i.e. the inverter 16 converts an AC current from the external motor 22 to a DC current which is fed into the DC link.

When the regenerative elevator drive 2 is supplying energy from the utility grid 4, the single-phase supply is connected to the inverter 16 via a rectifier within the power conversion unit 12. The rectifier is a PWM rectifier constructed from three rectifier bridge portions. The first bridge portion is constructed from a first upper reverse-bias diode 24 and a first lower reverse-bias diode 26, wherein the first upper reverse-bias diode 24 is connected in parallel with a first switch 28 and the first lower reverse-bias diode 26 is connected in parallel with a second switch 30.

Similarly, the second bridge portion is constructed from a second upper reverse-bias diode 32 and a second lower reverse-bias diode 34, wherein the second upper reverse-bias diode 32 is connected in parallel with a third switch 36 and the second lower reverse-bias diode 34 is connected in parallel with a fourth switch 38.

Finally, the third bridge portion is constructed from a third upper reverse-bias diode 40 and a third lower reverse-bias diode 42, wherein the third upper reverse-bias diode 40 is connected in parallel with a fifth switch 44 and the third lower reverse-bias diode 42 is connected in parallel with a sixth switch 46. In general, the upper reverse-bias diode 40 and fifth switch 44 are not used for the method described herein, but are typically present in practical systems in which three complete bridge portions may be provided within the PWM rectifier (e.g. in a standard part suitable for rectifying a three-phase AC voltage).

The live connection 6 from the utility grid 4 is connected to a node 48 between the first upper reverse-bias diode 24 and the first lower reverse-bias diode 26, i.e. the midpoint of the first bridge portion. The neutral connection 8 from the utility grid 4 is connected to a node 50 between the second upper reverse-bias diode 32 and the second lower reverse-bias diode 34, i.e. the midpoint of the second bridge portion. The dynamic braking resistor 20 is connected to a node 52 between the third upper reverse-bias diode 40 and the third lower reverse-bias diode 42, i.e. the midpoint of the third bridge portion.

The live and neutral connections 6, 8 from the utility grid 4 are connected to the respective nodes 48, 50 via an overcurrent circuit breaker (OCB) unit 54, such that current flowing from or to the utility grid 4 must pass through the OCB unit 54. The regenerative elevator drive 2 is further arranged such that current flowing from or to the battery 10 via the DC-DC converter 18 also passes through the OCB unit 54. The OCB unit 54 is constructed from two OCBs - a first OCB 54a and a second OCB 54b.

The OCB unit 54 comprises five switches 55a-e, where the first OCB 54a is constructed from three switches 55a, 55b, 55e; and the second OCB 54b is constructed from the other two switches 55b, 55c. When closed, the first and second switches 55a, 55b close the DC circuit such that current flows from the battery 10 to the DC-DC converter 18. When the first and second switches 55a, 55b are opened, both the positive and negative terminals of the battery 10 are advantageously disconnected from the rest of the circuit, which may improve the safety of the device compared with simply disconnecting one of the terminals of the battery 10.

The third and fourth switches 55c, 55d are arranged such that, when closed, they connect the live connection 6 and neutral connection 8 from the utility grid 4 to the rectifier (i.e. to the respective nodes 48, 50).

The fifth switch 55e is connected between the dynamic braking resistor 20 and the negative DC supply rail V_{DC-}. This switch 55e is a 'normally open' switch, i.e. current cannot normally flow along the path from the DC link capacitor 14 through the dynamic braking resistor 20 to the negative DC supply rail V_{DC-} during normal operation.

Thus when the OCB unit 54 is operated in a first state, the fifth switch 55e is open, while at least some of the remaining switches 55a-d are closed. Specifically, the first and second switches 55a, 55b are closed in order to connect the battery 10 to the regenerative elevator drive 2 and/or the third and fourth switches 55c, 55d are closed in order to connect the utility grid 4 to the regenerative elevator drive 2.

In a second 'tripped' state, the first four switches 55a-d are opened and the fifth switch 55e is closed, substantially simultaneously. Thus when the OCB unit 54 is tripped to the second state, the external power supplies - i.e. the utility grid 4 and the battery 10 - are disconnected from the regenerative energy drive 2 and the path from the DC link capacitor 14 through the dynamic braking resistor 20 to the negative DC supply rail V_{DC-} is closed.

The first OCB 54a is mechanically coupled to the second OCB 54b, such that as one OCB is tripped, the other OCB is also tripped, providing the substantially simultaneous operation of the switches referred to above. The first OCB 54a is therefore a circuit breaker for the DC supply (i.e. from the battery 10) while the second OCB 54b is a circuit breaker for the AC supply (i.e. the utility grid 4). The switch 55e that provides current flow from the DC link capacitor 14 through the dynamic braking resistor 20 to the negative DC supply rail V_{DC-} is part of the first (i.e. DC) OCB 54a, however arrangements are envisaged in which this switch 55e is part of the second (i.e. AC) OCB 54b, or in which is part of a third OCB which is mechanically coupled to the other OCBs.

Because this arrangement uses a single-phase AC supply, the DC link capacitor 14 is large in order to provide adequate smoothing of the ripple current. In some examples, the DC link capacitor may be 390 µF compared with a more typical 90 µF for a multi-phase arrangement.

When the regenerative elevator drive 2 is supplying energy to the motor 22 from the utility grid 4, the AC supply is passed through the rectifier, where respective PWM drive signals are applied to selectively open and close the switches 28, 30, 36, 38 in the first and second rectifier bridge portions so as to rectify the AC signal from the utility grid 4. The DC link capacitor 14 acts to smooth the rectified signal, and the resulting smoothed DC signal is provided to the input of the inverter 16.

When the regenerative elevator drive 2 is supplying energy to the motor 22 from the battery 10, the DC supply from the battery is converted by the converter 18 from the battery voltage to a voltage suitable for input to the inverter 16. Conversely, when the regenerative elevator drive 2 is supplying regenerative energy to the battery 10 from the motor 22, the return DC voltage is converted to the battery voltage by the converter 18.

When driving the motor 22, the inverter 16 converts the DC voltage at its input into an AC voltage that is supplied to the motor. Similarly, when braking, the motor 22 acts as a generator, providing an AC voltage that is converted to a DC voltage by the inverter 16.

In order to carry out maintenance work on an elevator system in which the regenerative elevator drive 2 is located, a user 56 needs for the DC link capacitor 14 to be discharged. The user 56 trips the OCB 54, which operates the switches 55a-e within the OCB unit 54 to the second state, i.e. the OCB unit 54 is tripped such that the switches 55a-d through which the external power supplies (i.e. the utility grid 4 and battery 10) are connected are opened, while the switch 55e between the dynamic braking resistor 20 and the negative DC supply rail V_{DC-} is closed. This causes the DC link capacitor 14 to be discharged relatively quickly through the dynamic braking resistor 20. As will be appreciated by those skilled in the art, the time taken to discharge the DC link capacitor 14 is dependent on the time constant τ for the resistor-capacitor (RC) network formed by the DC link capacitor 14 and dynamic braking resistor 20.

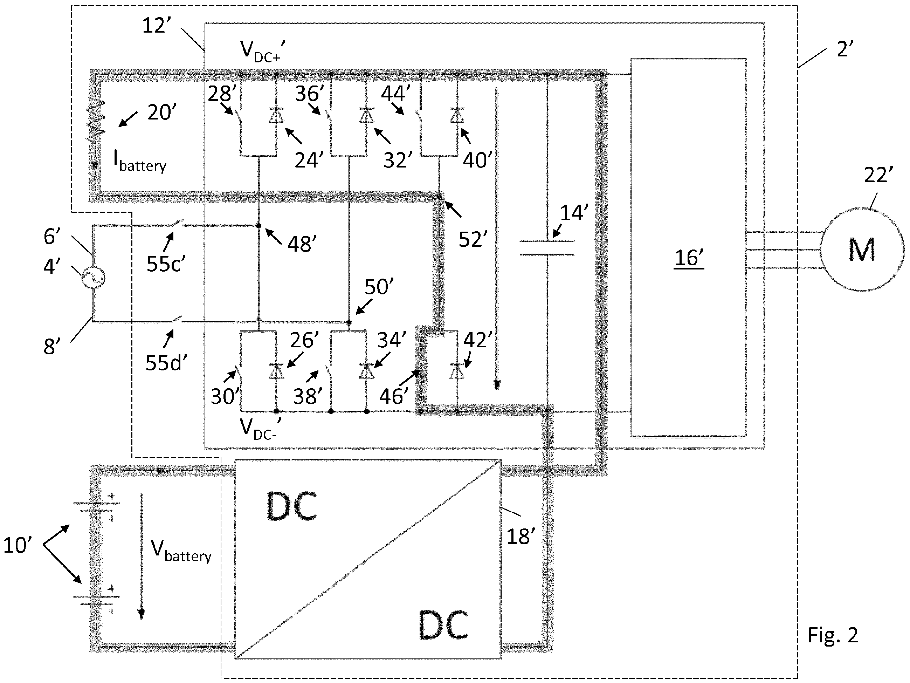

Fig. 2 is a circuit diagram of a regenerative elevator drive 2' in accordance with a further example of the present disclosure. Many of the components in the regenerative elevator drive 2' of Fig. 2 are similar to those described hereinabove with reference to Fig. 1, where like reference numerals denote like components.

In order to measure the state-of-health of the battery 10', a diagnostic method may be carried out on the regenerative elevator drive 2'. In order to determine the state-of-health of the battery 10', a measure of its internal resistance is taken. During this diagnostic process, the utility grid 4 may be disconnected from the regenerative elevator drive 2' by opening the corresponding switches 55c', 55d'.

Firstly, the regenerative elevator drive 2' is operated in a first diagnostic step, in which a first measurement V₁ of the DC voltage V_{battery} produced by the battery 10' is performed while no current is supplied by the battery 10'. In order to prevent the supply of current by the battery 10', the DC-DC converter 18' is switched off.

Secondly, the regenerative elevator drive 2' is operated in a second diagnostic step, in which a second measurement V₂ of the DC voltage V_{battery} produced by the battery 10' is performed while a current I_{battery} supplied by the battery 10' is passed through the dynamic braking resistor 20'.

A voltage difference ΔV is calculated as the difference between the first and second measurements of the DC voltage produced by the battery 10', i.e. ΔV = V₁ - V₂. The internal resistance Rᵢₙₜₑᵣₙₐₗ of the battery 10' is determined from the ratio between the voltage difference ΔV and the current I_{battery} supplied by the battery 10' in the second diagnostic step, i.e. Rᵢₙₜₑᵣₙₐₗ.= ΔV / I_{battery}.

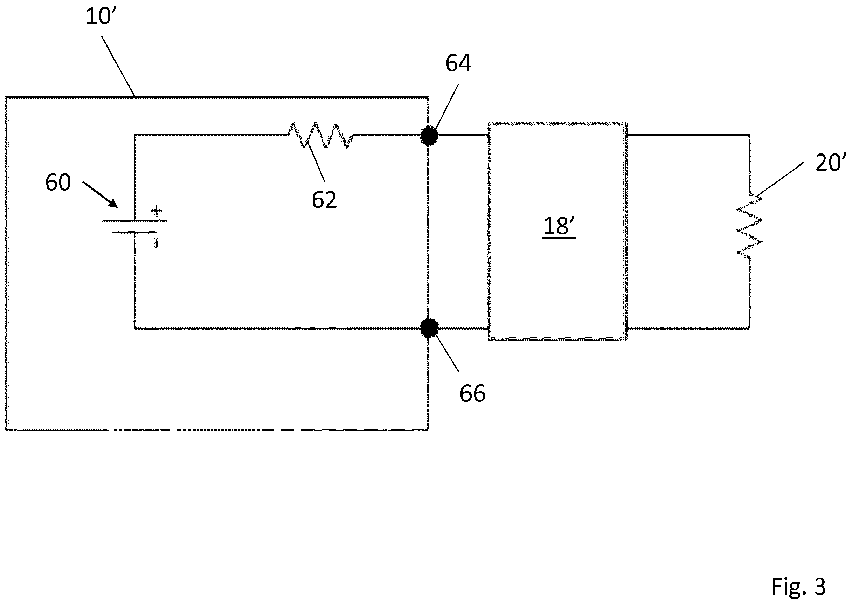

This may be more readily understood with reference to Fig. 3, which is a circuit diagram illustrating the Thevenin equivalent circuit of the monitored battery 10' shown in Fig. 2. It will, however, be appreciated that the same diagnosis steps could be carried out on the regenerative elevator drive 2 of Fig. 1.

In the Thevenin equivalent circuit of Fig. 3, the battery 10' is modelled as an open circuit voltage 60 connected in series with a resistor 62, which represents the internal resistance Rᵢₙₜₑᵣₙₐₗ of the battery 10'. As above, the battery 10' is connected to the dynamic braking resistor 20' via the DC-DC converter 18'.

The first measurement V₁ of the DC voltage V_{battery} produced by the battery 10' is taken by switching off the DC-DC converter 18', and measuring the potential difference across the terminals 64, 66 of the battery 10'. The second measurement V₂ of the DC voltage V_{battery} produced by the battery 10' is then taken by switching on the DC-DC converter 18', and measuring the potential difference across the terminals 64, 66 of the battery 10'.

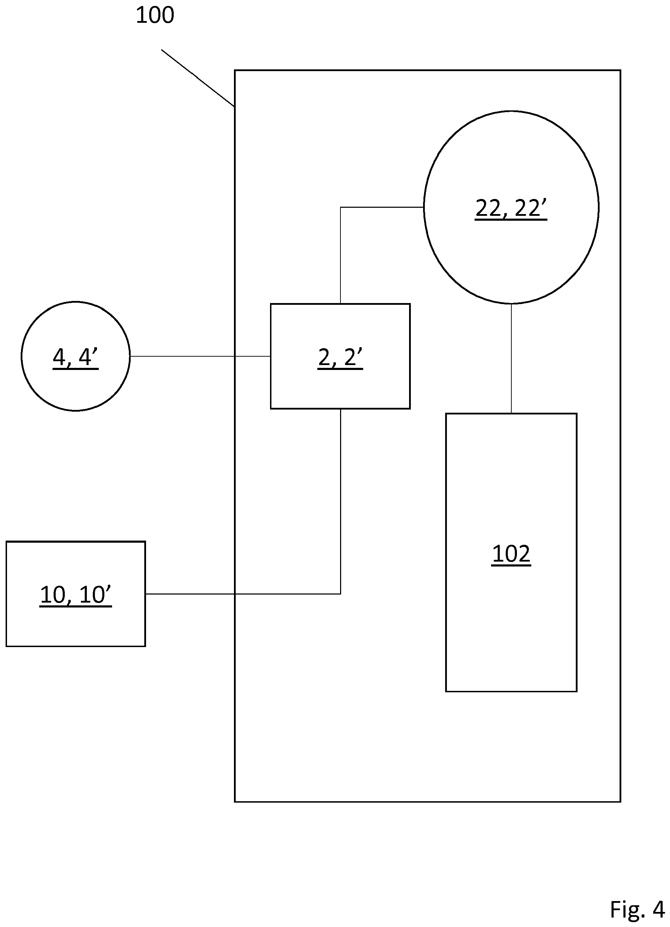

Fig. 4 is a block diagram of an elevator system 100 that includes a regenerative elevator drive 2, 2' in accordance with an example of the present disclosure. It will be appreciated that the block diagram of Fig. 4 is simplistic for ease of illustration, and other arrangements are possible.

The regenerative elevator drive 2, 2' receives power from the utility grid 4, 4' and/or the battery 10, 10' as appropriate, and drives power to the motor 22, 22' which is used to move an elevator car 102 within an elevator hoistway. The regenerative elevator drive 2, 2' also supplies power to the utility grid 4, 4' and/or the battery 10, 10' as appropriate, where the regenerative power arises from the motor 22, 22', e.g. when braking the elevator car 102.

Thus it will be appreciated by those skilled in the art that examples of the present disclosure provide an improved regenerative elevator drive, and a method of operating the same, that is arranged to discharge the DC link capacitor through the dynamic braking resistor, which may significantly reduce the amount of time required for the DC link capacitor to discharge and thus be safe for maintenance to be carried out. Examples of the present disclosure also provide a regenerative elevator drive that may determine the state-of-health and/or the expected end of life of the battery from the internal resistance of that battery by passing a current from the battery through the dynamic braking resistor. It will be appreciated by those skilled in the art that the examples described above are merely exemplary and are not limiting on the scope of the claims.

## Claims

1. A regenerative elevator drive arranged to receive power from an external power supply, the regenerative elevator drive comprising:
an inverter arranged to receive at an input thereof a DC voltage, derived from the external power supply, and to convert the DC voltage to an AC voltage for output to an external motor;
a DC link capacitor connected across the input of the inverter;
a dynamic braking resistor; and
a circuit breaker unit arranged to switch between a first state and a second state, wherein the first state provides a connection between the inverter and the external power supply, and wherein the second state disconnects the inverter from the external power supply;
wherein the regenerative elevator drive is arranged to direct regenerative energy to the external power supply, said regenerative elevator drive being further arranged to direct excess regenerative energy through said dynamic braking resistor; and
wherein the circuit breaker unit is arranged such that the circuit breaker unit provides a discharge path from the DC link capacitor via the dynamic braking resistor only in the second state.

2. The regenerative elevator drive as claimed in claim 1, wherein the external power supply comprises a utility grid and the regenerative elevator drive further comprises a converter arranged to receive an AC voltage from the grid and convert said AC voltage to the DC voltage that is supplied to the inverter, optionally wherein the AC voltage received from the utility grid comprises a single-phase AC voltage.

3. The regenerative elevator drive as claimed in claim 2, comprising a rectifier, said rectifier being arranged to convert the AC voltage from the utility grid to the DC voltage that is supplied to the input of the inverter.

4. The regenerative elevator drive as claimed in claim 3, wherein the rectifier is a pulse width modulation (PWM) rectifier and comprises first, second, and third rectifier bridge portions, wherein:
each bridge portion comprises a respective positive and negative reverse-bias diode connected in series with a respective node between said diodes, wherein each reverse-bias diode is connected in parallel with a respective switch; and wherein a respective PWM control signal is applied to the switches to selectively short the corresponding node to the positive supply rail or the negative supply rail;
wherein the node of the first rectifier bridge portion is arranged for connection to a live input of the AC voltage;
wherein the node of the second rectifier bridge portion is arranged for connection to a neutral input of the AC voltage; and
wherein the node of the third rectifier bridge portion is connected to the dynamic braking resistor, such that the dynamic braking resistor is connected between the node of the third rectifier bridge portion and the DC link capacitor.

5. The regenerative elevator drive as claimed in any preceding claim, wherein the DC link capacitor is connected between a positive supply rail and a negative supply rail, wherein the dynamic braking resistor is connected in series with the circuit breaker unit between the positive supply rail and the negative supply rail.

6. The regenerative elevator drive as claimed in any preceding claim, wherein the external power supply comprises a battery, wherein the battery provides a DC voltage to the regenerative elevator drive.

7. The regenerative elevator drive as claimed in claim 6, wherein the regenerative elevator drive is arranged such that:
in a first diagnostic step, a first measurement of the DC voltage produced by the battery is measured while no current is supplied by the battery;
in a second diagnostic step, a second measurement of the DC voltage produced by the battery is measured while a current supplied by the battery is passed through the dynamic braking resistor;
wherein an internal resistance of the battery is determined from a ratio between a voltage difference and the current supplied by the battery in the second diagnostic step, said voltage difference being the difference between the first and second measurements of the DC voltage produced by the battery.

8. The regenerative elevator drive as claimed in claim 1, wherein the external power supply comprises a utility grid and a battery, wherein the battery provides a DC voltage to the regenerative elevator drive,
wherein the regenerative elevator drive is arranged such that:
in a first diagnostic step, a first measurement of the DC voltage produced by the battery is measured while no current is supplied by the battery;
in a second diagnostic step, a second measurement of the DC voltage produced by the battery is measured while a current supplied by the battery is passed through the dynamic braking resistor;
wherein an internal resistance of the battery is determined from a ratio between a voltage difference and the current supplied by the battery in the second diagnostic step, said voltage difference being the difference between the first and second measurements of the DC voltage produced by the battery
the regenerative elevator drive further comprising:
a converter arranged to receive an AC voltage from the grid and convert said AC voltage to the DC voltage that is supplied to the inverter; and
a pulse width modulation (PWM) rectifier, said PWM rectifier comprising first, second, and third rectifier bridge portions, wherein:
each bridge portion comprises a respective positive and negative reverse-bias diode connected in series with a respective node between said diodes, wherein each reverse-bias diode is connected in parallel with a respective switch; and wherein a respective PWM signal is applied to the switches to selectively short the corresponding node to the positive supply rail or the negative supply rail;
wherein the node of the first rectifier bridge portion is arranged for connection to a live input of an AC voltage received from an external power supply;
wherein the node of the second rectifier bridge portion is arranged for connection to a neutral input of the AC voltage received from the external power supply; and
wherein the node of the third rectifier bridge portion is connected to the dynamic braking resistor, such that the dynamic braking resistor is connected between the node of the third rectifier bridge portion and the DC link capacitor;
wherein the regenerative elevator drive is arranged such that, when operated in the second diagnostic step, the switch arranged in parallel with the lower reverse-bias diode in the third rectifier bridge portion is closed such that the current supplied by the battery is passed through the dynamic braking resistor.

9. The regenerative elevator drive as claimed in any preceding claim, wherein the circuit breaker unit comprises a first circuit breaker and a second circuit breaker, wherein the circuit breaker unit is arranged such that:
in the first state, the first circuit breaker provides a connection between the inverter and a first external power supply;
in the first state, the second circuit breaker provides a connection between the inverter and a second external power supply;
in the second state, the first circuit breaker disconnects the inverter from the first external power supply; and
in the second state, the second circuit breaker disconnects the inverter from the second external power supply;
wherein the first circuit breaker is mechanically coupled to the second circuit breaker.

10. An elevator system comprising the regenerative elevator drive as claimed in any preceding claim, wherein the elevator system comprises the external motor.

11. A method of operating a regenerative elevator drive arranged to receive power from an external power supply, the method comprising:
receiving at an input of an inverter a DC voltage, derived from the external power supply;
converting the DC voltage to an AC voltage for output to an external motor;
directing regenerative energy to the external power supply, wherein excess regenerative energy is directed through a dynamic braking resistor;
operating a circuit breaker unit in a first state which provides a connection between the inverter and the external power supply; and
operating the circuit breaker unit in a second state which disconnects the inverter from the external power supply, wherein the circuit breaker unit is arranged such that the circuit breaker unit provides a discharge path from the DC link capacitor via the dynamic braking resistor only in the second state.

12. A regenerative elevator drive arranged to receive power from a battery, the regenerative elevator drive comprising:
an inverter arranged to receive at an input thereof a DC voltage, derived from a DC voltage produced by the battery, and to convert the DC voltage to an AC voltage for output to an external motor; and
a dynamic braking resistor;
wherein the regenerative elevator drive is arranged to direct regenerative energy to the battery, said regenerative elevator drive being further arranged to direct excess regenerative energy through said dynamic braking resistor; and
the regenerative elevator drive being arranged such that:
in a first diagnostic step, a first measurement of the DC voltage produced by the battery is measured while no current is supplied by the battery;
in a second diagnostic step, a second measurement of the DC voltage produced by the battery is measured while a current supplied by the battery is passed through the dynamic braking resistor;
wherein an internal resistance of the battery is determined from a ratio between a voltage difference and the current supplied by the battery in the second diagnostic step, said voltage difference being the difference between the first and second measurements of the DC voltage produced by the battery.

13. The regenerative elevator drive as claimed in claim 12, further comprising a pulse width modulation (PWM) rectifier, said PWM rectifier comprising first, second, and third rectifier bridge portions, wherein:
each bridge portion comprises a respective positive and negative reverse-bias diode connected in series with a respective node between said diodes, wherein each reverse-bias diode is connected in parallel with a respective switch; and wherein a respective PWM signal is applied to the switches to selectively short the corresponding node to the positive supply rail or the negative supply rail;
wherein the node of the first rectifier bridge portion is arranged for connection to a live input of an AC voltage received from an external power supply;
wherein the node of the second rectifier bridge portion is arranged for connection to a neutral input of the AC voltage received from the external power supply; and
wherein the node of the third rectifier bridge portion is connected to the dynamic braking resistor, such that the dynamic braking resistor is connected between the node of the third rectifier bridge portion and the DC link capacitor;
wherein the regenerative elevator drive is arranged such that, when operated in the second diagnostic step, the switch arranged in parallel with the lower reverse-bias diode in the third rectifier bridge portion is closed such that the current supplied by the battery is passed through the dynamic braking resistor.

14. An elevator system comprising the regenerative elevator drive as claimed in claim 12 or 13, wherein the elevator system comprises the external motor.

15. A method of operating a regenerative elevator drive arranged to receive power from a battery, the method comprising:
receiving at an input of an inverter a DC voltage, derived from the battery;
converting the DC voltage to an AC voltage for output to the motor;
directing regenerative energy to the battery, wherein excess regenerative energy is directed through a dynamic braking resistor;
in a first diagnostic step, taking a first measurement of the DC voltage produced by the battery while no current is supplied by the battery;
in a second diagnostic step, taking a second measurement of the DC voltage produced by the battery while a current supplied by the battery is passed through the dynamic braking resistor; and
determining an internal resistance of the battery from a ratio between a voltage difference and the current supplied by the battery in the second diagnostic step, said voltage difference being the difference between the first and second measurements of the DC voltage produced by the battery.
